# EUROPEAN PATENT APPLICATION

(11) **EP 1 293 805 A2**
(43) Date of publication of application: **19.03.2003**
(21) Application number: 02020501.9
(22) Date of filing: 12.09.2002
(51) Int. Cl.: G01T 3/06

(54) **Neutron scintillator**

(30) Priority: 14.09.2001 JP 2001279563
(71) Applicant: Riken, Wako-shi, Saitama 351-0198 (JP); Hitachi Chemical Co., Ltd., Shinjuku-ku, Tokyo 163-0449 (JP); Dai-Ichi Kiden Co., Ltd, Chofu city, Tokyo 182-0034 (JP)
(72) Inventor: Shimizu, Hirohiko,, Wako-shi, Saitama, 351-0198 (JP); Oku, Takayuki, Wako-shi, Saitama, 351-0198 (JP); Adachi, Tomohiro, Wako-shi, Saitama, 351-0198 (JP); Sakai, Kenji, Wako-shi, Saitama, 351-0198 (JP); Hiroyuki, Ishibashi, Yamazaki Works (Katsuta), Hitachinaka-shi, Ibaraki, 312-0003 (JP); Kenzou, Susa, Research/Development Center, Tsukuba-shi, Ibaraki, 300-4247 (JP); Senguttuvan,Nachimuthu Research/Development Center, Tsukuba-shi, Ibaraki, 300-4247 (JP); Ishii, Mitsuru, Dai-Ichi Kiden Co., Ltd.,, Chofu city, Tokyo 182-0034 (JP); Kobayashi, Masaaki, High Energy Accelerator Rsrch, Oho 1-1, Tsukuba-shi, Ibaraki, 305-0801 (JP)
(74) Representative: Grünecker, Kinkeldey, Stockmair & Schwanhäusser Anwaltssozietät

(57) **Abstract**

To provide a neutron scintillator, which does not contain a heavy element, which is absolutely necessary in realizing a scintillation detector having low sensitivity to gamma ray and fully capable of counting high intensity neutron, Cu is doped in oxide comprised of Li and B. The oxide comprised of Li and B is a transparent single crystal having composition ratio of Li₂B₄O₇. The neutron scintillator contains Cu by 0.001 to 0.1wt%. Furthermore, a (001) plane cut off perpendicularly to a growth axis and polished from the single crystal whose orientation has been grown in a 〈001〉 axis is made to be a scintillator plate crystal.

## Description

### Background of The Invention

### Field of The Invention

The present invention relates to a neutron scintillator. More particularly, the present invention relates to a neutron scintillator preferable for using as a scintillator in a scintillation detector that is a neutron detector used in a neutron scattering experiment or the like.

It is to be noted that the scintillator is a material that emits fluorescence when the radiation is absorbed in the material. In this specification, a material that absorbs neutron and emits fluorescence when the neutron collides the material is referred to as the neutron scintillator.

### Description of The Related Art

At the present day, construction plans of a high-intensity pulsed neutron source are in process in Japan, U.S.A. and Europe. The intensity of the neutron beam generated by such a high-intensity pulsed neutron source is expected to be two or three orders of magnitude higher compared with neutron source currently in operation.

At present, 'He gas detector and a scintillation detector are used in the neutron scattering experiments.

Herein, since neutron does not have electric charge, a converter that converts neutron into a charged particle or gamma ray is required to detect neutron. There are known ³He, ⁶Li, ¹⁰B, ¹¹³Cd, ¹⁵⁵Gd, and ¹⁵⁷Gd as the neutron converter, but Cd and Gd are not suitable for application to the neutron detector for the neutron scattering experiment because they are heavy elements and have high sensitivity to gamma ray.

For this reason, the ³He gas detector that is the neutron detector using ³He gas is now mainly used due to the reason that it has low sensitivity to gamma ray. The neutron counting capability of the ³He gas detector is about 10⁴/sec which is not so high. However, the ³He gas detector is widely used in the neutron scattering experiment, since it has low sensitivity to gamma ray can distinguish a neutron signal from a gamma ray signal almost completely.

On the other hand, although the scintillation detector has counting ability of about 10⁶/sec, it has high sensitivity to gamma ray because it contains a heavy element, so that cases where it is used in actual neutron scattering experiment were limited.

However, once the high-intensity pulsed neutron source, whose construction is currently in process, is put into operation, counting of high intensity neutron cannot be performed with the counting ability of the ³He gas detector. Accordingly, there is an urgent need for development of the scintillation detector that has low sensitivity to gamma ray and can fully perform counting of the high intensity neutron, and proposal of the neutron scintillator that can be used in the scintillation detector and does not contain a heavy element has been strongly desired.

Although the neutron scintillator using Li and B as converters has been developed, the neutron scintillator that does not contain a heavy element has not been developed yet. Further, research has been made for a material having composition ratio of Li₂B₄O₇, but it has not obtained characteristics as a good neutron scintillator.

### Objects and Summary of The Invention

The present invention has been made in view of the above-described points, and an object of the present invention is to provide a neutron scintillator that does not contain a heavy element, which is imperative to realize the scintillation detector having low sensitivity to gamma ray and fully capable of performing counting of high intensity neutron.

In order to achieve the above-described object, the neutron scintillator according to the present invention is oxide comprised of Li and B, to which Cu has been doped.

As described, by doping Cu by a small amount to the oxide comprised of Li and B, good characteristics as the neutron scintillator could be obtained.

Specifically, the neutron scintillator according to the present invention is oxide comprised of Li and B, to which Cu has been doped.

Further, the neutron scintillator according to the present invention contains Cu that is Cu₂O by 0.001 to 0.1wt%.

Furthermore, the neutron scintillator according to the present invention is the oxide comprised of Li and B, which is a transparent single crystal having composition ratio of Li₂B₄O₇.

Further, the neutron scintillator according to the present invention is one that a (001) plane cut off perpendicularly to a growth axis and polished from the single crystal, whose orientation has been grown in a <001> axis, is made to be a scintillator plate crystal.

Specifically, this neutron scintillator is made to be in a plate shape parallel with the (001) plane since the <001> axis optically has excellent symmetry and no optical anisotropy because the crystal structure is in a tetragonal shape, and it is preferable that the neutron is made incident in parallel with the <001> axis.

Still further, the neutron scintillator according to the present invention is the neutron scintillator comprised of single crystal, which has the neutron counting ability of 10⁷/sec or more.

### Brief Description of The Drawings

The present invention will become more fully understood from the detailed description given hereinbelow and the accompanying drawings which are given by way of illustration only, and thus are not limitative of the present invention, and wherein:
Fig. 1 shows an experimental setup when neutron scintillation characteristics was evaluated;
Fig. 2 shows a histogram of scintillation signal integration values of LBO(Cu) when neutron is irradiated;
Fig. 3 shows a histogram of scintillation signal integration values of LBO(Cu) when neutron is not irradiated;
Fig. 4 shows a waveform of scintillation signal of LBO(Cu) ;
Fig. 5 shows a waveform of scintillation signal of Li glass;
Fig. 6 shows a LBO thickness dependency of absorption probability (calculated value) for thermal neutron (wavelength: 0.18nm) and cold neutron (wavelength: 0.65nm); and
Fig. 7 is a relationship between UV excited fluorescence intensity of LBO(Cu) and a concentration of Cu₂O.

### Detailed Description of The Preferred Embodiments

An example of embodiments of the neutron scintillator according to the present invention will be described in detail below based on the accompanying drawings.

The neutron scintillator according to an example of the embodiments of the present invention is a single crystal of the oxide comprised of Li and B, to which Cu has been doped by a small amount. The oxide comprised of Li and B, is the transparent single crystal having composition ratio of Li₂B₄O₇, for example. When Cu is doped to the Li₂B₄O₇ single crystal, it is preferable that the crystal contains Cu that is Cu₂O by 0.001 to 0.1wt% of weight ratio.

It is to be noted that, in this specification, the single crystal of the oxide comprised of Li and B is referred to as an 'LBO single crystal'.

The neutron scintillator according to the present invention can be fabricated by manufacturing methods shown in the following examples 1.

### 1. Manufacturing method

### 1-1. Example 1 (Cu doped LBO single crystal)

Example 1 shows the manufacturing method of the neutron scintillator comprised such that a small amount of Cu has been doped to the LBO single crystal.

The neutron scintillator that is the Cu doped LBO single crystal was grown by a Bridgman technique, more specifically, a vertical Bridgman technique. A single crystal growing furnace is a vertical Bridgman type electric furnace made up of 3 zones, which is a Kanthal resistive heater method.

The dimensions of a crucible used are about φ20×160mm, and a seed tube of φ5×50mm is provided at a bottom section, and a cone section of a conical shape having 90° of a cross-section angle is welded between them.

It is to be noted that the thickness of the crucible is 0.3mm, and its material is Pt.

An undoped LBO single crystal to which Cu has not been doped was processed in about φ4.9mm×37mm, and the processed undoped LBO single crystal was placed at the bottom section of the crucible as a seed crystal. The orientation of the seed crystal in a longitudinal direction (single crystal growing direction) was made to be <001> taking in consideration the optical anisotropy of the LBO crystal. Materials were a high-purity Poly crystal lithium tetraborate (Li₂B₄O₇) having the purity of 99.99% manufactured by Tomiyama Pure Chemical industries, Ltd., and copper oxide (Cu₂O) having the purity of 99.99% sold in the market, and weighing is performed such that the concentration of Cu₂O became 0.05wt%. Specifically, 49.75g of Li₂B₄O₇ and 0.25g of Cu₂O were weighed, and they were mixed to put in the crucible. The crucible in which the materials were put was placed at the bottom section in the electric furnace.

Next, the electric furnace was heated such that the top position of the seed tube in the furnace reaches 917°C that is the melting point of the LBO single crystal. This position is the growth point of LBO single crystal growth.

Further, the temperature of each zone was adjusted such that the temperature gradient in the furnace reached 23°C/cm that is suitable for the LBO single crystal growth. The crucible was elevated to stop at the position where a seed section of the crucible reached the growth point, which was keeped for about 24 hours to melt the material in the crucible. Then, the crucible was made to go down in the speed of 0.3mm/h to grow the single crystal. The atmosphere in the furnace during the single crystal growth is nitrogen.

After the crucible was made to go down to the point where all the material became the single crystal, it stops going down, and the temperature of each zone was decreased to the room temperature in about 20 hours. When cooling was completed and the temperature reached the room temperature, the crucible having the single crystal therein was brought out from the furnace, and the single crystal was brought out by stripping off the crucible.

The single crystal obtained in this manner had the seed crystal in the bottom section of about 30mm, the length of the conical section of about 10mm, a body section of about φ20×55mm, and the total weight of about 49g. As a result of microanalysis for good quality portion of the single crystal, Cu₂O concentration was 0.03wt%, from which it was confirmed that doped Cu had dissolved without fail. The good quality portion of the obtained single crystal was cut out using a cutter in particular dimensions perpendicular to a growth axis, a required surface was polished in a specular surface (001), and thus a sample for evaluation of the Cu doped LBO single crystal was formed.

### 2. Evaluation

Next, neutron was irradiated on the samples of the Cu doped LBO single crystal manufactured in example 1 to perform evaluation of neutron scintillation characteristics, and functions of the Cu doped LBO single crystal and as the neutron scintillator. Further, emission characteristics by ultraviolet ray irradiation, which is closely related with the characteristics of the neutron scintillation, were also evaluated.

### 2-1-1. Evaluation method using neutron

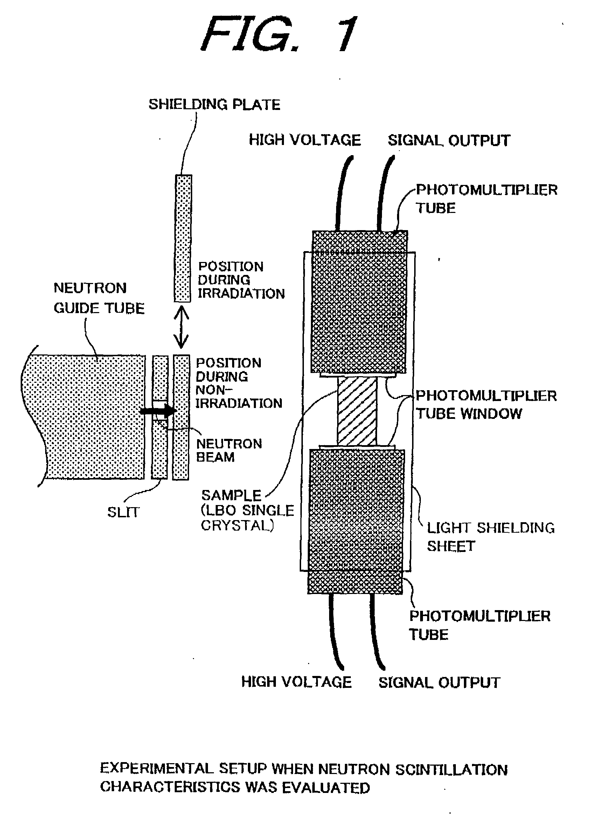

Evaluation of the neutron scintillation characteristics of the LBO single crystal having Cu₂O concentration of 0.05wt% was performed. Fig. 1 shows the setup used in the evaluation. The wavelength of neutron used was λ=1.1nm (Δλ/λ=13%). The sample was sandwiched between two photomultiplier tubes (H6568 of Hamamatsu Photonics K. K.) opposing to each other. The sample and the windows of the photomultiplier tubes were adhered using optical grease. A voltage of 950V was applied to the photomultiplier tubes. A light-shielding sheet of vinyl chloride having transmittance for neutron was used as light shield for the photomultiplier tubes. Only a synchronized signal out of output signals from the two photomultiplier tubes were measured with the use of an analog/digital converter of electric charge integration type (7166 of Philips, Ltd.).

To evaluate the neutron scintillation characteristics of the Cu doped LBO single crystal, the output signals from the photomultiplier tubes were measured and compared when neutron was irradiated on the sample and when a beam line was blocked by a teflon plate having a thickness of 5mm containing 30wt% of ⁶LiF, which is shielding member for neutron. Further, measurement of scintillation light from a neutron scintillator Li glass [GS20 of Bicron] was performed for comparison.

Furthermore, neutron absorption probability of the LBO single crystal was performed or reference.

### 2-1-2. Evaluation method using ultraviolet ray

A few kinds of Li₂B₄O₇ single crystal having different Cu₂O concentrations were fabricated, and emission intensity by ultraviolet ray was measured using a fluorescence spectrophotometer (F4500 of Hitachi, Ltd). A sample shape used in measurement had the area of 10x20mm with the thickness of 5mm, and its surface was smoothly polished in a specular surface.

### 2-2-1. Evaluation result when neutron was used

Emission associated with irradiation of neutron was recognized and relatively good emission characteristics were observed in the Cu doped LBO single crystal (LBO(Cu).

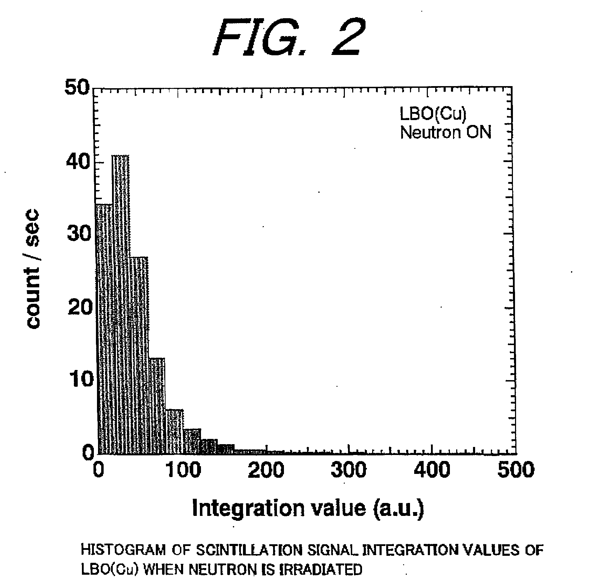

Figs. 2 to 5 show the histograms of the signal integration values and the signal waveform of the scintillation light measured.

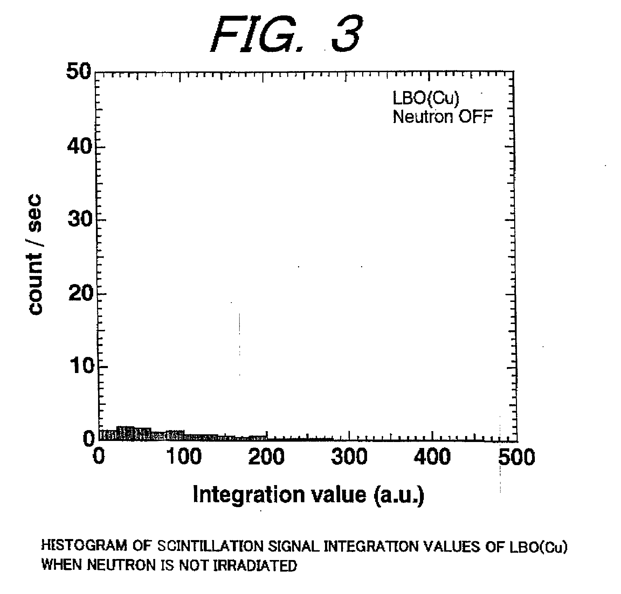

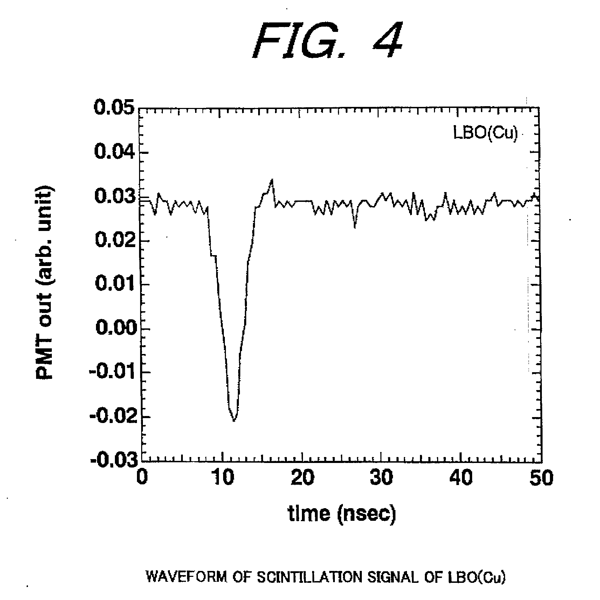

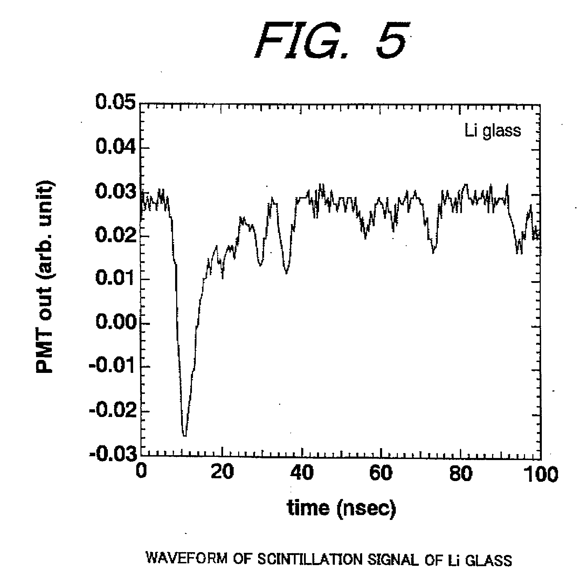

Figs. 2 and 3 are respectively histograms of integration values of the output signals measured when neutron was and was not irradiated on the sample LBO(Cu). Comparing the two graphs, it has been clarified that LBO(Cu) emitted light due to neutron irradiation. Figs. 4 and 5 respectively show the scintillation light pulse of LBO(Cu) and the Li glass [G20 of Bicron] that was measured for comparison. Decay time of the scintillation light of LBO(Cu) was about 2 nanoseconds, and it has been found out that it was shorter by a number of digits comparing to that of the Li glass. Further, the light quantity of the scintillation light of LBO(Cu) was a few % of that of the Li glass.

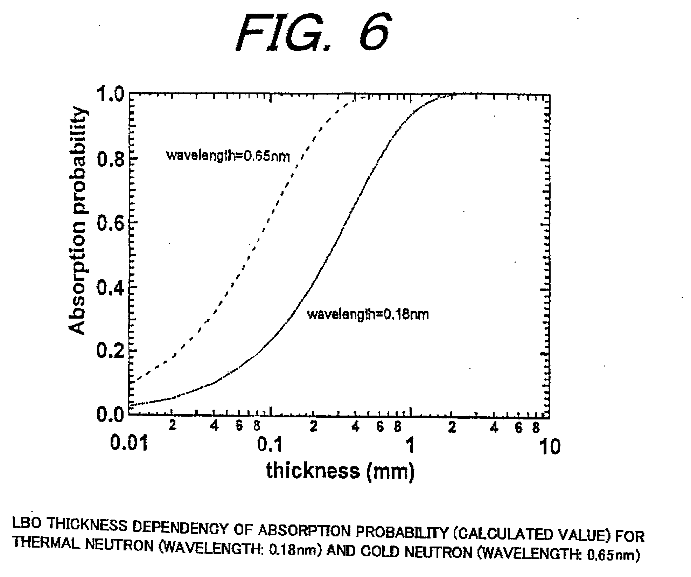

As a result of measuring absorption probability of neutron to the Pure LBO (undoped LBO single crystal), it was 100% for both wavelengths of 0.65nm and 0.37nm. Fig. 6 shows the absorption probability (calculated value) for the thermal neutron (wavelength: 0.18nm) and the cold neutron (wavelength: 0.65nm) for reference.

### 2-2-2. Evaluation result when ultraviolet ray was used

Ultraviolet ray was irradiated on the LBO(Cu) crystal to measure fluorescence. As a result, it has been confirmed that intense fluorescence appeared at 360nm by excitation of ultraviolet ray of 245nm. Furthermore, it has also been clarified that the intensity of fluorescence depended on the concentration of Cu doped.

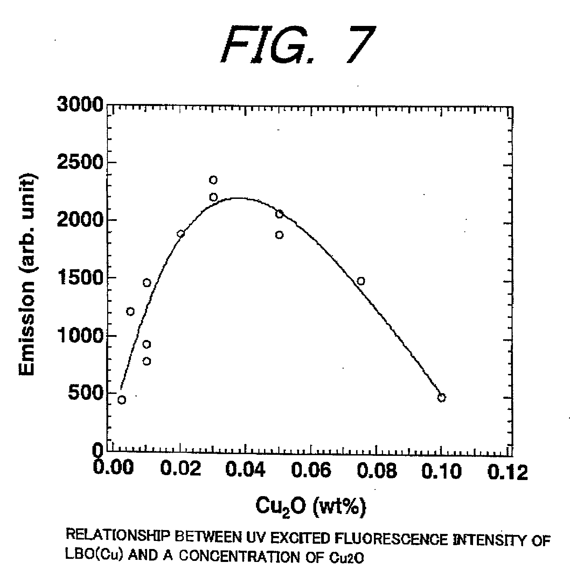

Fig. 7 shows the result, where fluorescence appeared when Cu₂O was doped to Li₂B₄O₇, fluorescence became maximum at doping of Cu₂O at 0.03wt%, fluorescence intensity reduced when Cu₂O further increased, and fluorescence drastically reduced at doping of 0.1wt%.

### 2-3. Summary of evaluation result

Relatively good neutron scintillation characteristics were observed regarding the LBO single crystals to which Cu was doped. The single crystal had the light quantity of a few % of Li glass, which is considered to be at a practical use level. Further, since the pulse width of the scintillation fluorescence is about 2 nanoseconds, which is shorter than that of scintillator formed of ZnS or Li glass by a number of digits, high counting rate and high time resolution are expected. Specifically, the neutron counting ability is 10⁷/sec or more. The detection efficiency is also higher than that of ZnS, and it can be improved by converting Li into concentrated ⁶Li. Furthermore, since the single crystals are expected to have low sensitivity to gamma ray, it is considered that they have the proper conditions for putting them into practical use as a neutron scintillation detector.

Fluorescence appears when Cu₂O is doped to Li₂B₄O₇, fluorescence becomes maximum at doping of Cu₂O at 0.03wt%, fluorescence intensity reduces when Cu₂O further increases, and fluorescence drastically reduces at doping of 0.1wt%. It can be concluded that a single crystal of composition containing Cu₂O at least 0.00wt1% or more up to 0.1wt% to Li₂B₄O₇, desirably the one containing Cu₂O from 0.0wt1% to 0.08wt% is preferable as a neutron scintillator.

As described above, the emission pulse width of the Cu doped LBO single crystal (LBO(Cu)) according to the present invention, that is, Li₂B₄O₇(Cu) more particularly, is about 2 nanoseconds, and it is possible to develop a neutron detector having very high counting rate and high time resolution by the use of these scintillators. The emission pulse width of typical neutron scintillators, which are ZnS and Li glass, is 1000 nanoseconds and 200 nanoseconds, respectively.

The Cu doped LBO single crystal (LBO(Cu)) according to the present invention, that is, Li₂B₄O₇(Cu) more particularly, has low sensitivity to gamma ray, because they are comprised of elements with smaller atomic number. Among the neutron scintillators that are currently in practical use, ZnS has the lowest sensitivity to gamma ray (higher than that of a ³He gas detector by 1 to 2 digits), and it is used most frequently. It is expected that Li₂B₄O₇ has lower sensitivity to gamma ray than ZnS.

Still further, the light quantity of light emitted when the Cu doped LBO single crystal (LBO(Cu)) according to the present invention, that is, Li₂B₄O₇(Cu) more particularly, absorbs neutron is a few % that of Li glass, and thus it is at a practicable level.

The neutron scintillator according to the present invention is required to be optically transparent for the emission wavelength at 360nm, and it therefore must be a single crystal. The Bridgman technique is desirable for fabrication of the single crystal, and the single crystal having the diameter of 20mm or more could be fabricated relatively easily in the present invention by adopting this technique.

Moreover, the growth axis of the single crystal fabricated was made to be <001>, where no problem occurs in fabricating the single crystal. In the case where a (001) wafer cut off vertically to the growth axis of an ingot fabricated is made to be the scintillator plate, diffusion of fluorescence does not have anisotropy when neutron is made vertically incident to the plate, and an image plate for detecting neutron with excellent performance can be constituted with the use of the wafer.

It is to be noted that, in the above-described embodiments, a ratio of Cu when it is doped in the LBO single crystal can be set to 0.001 to 0.1wt%.

Since the present invention is constituted as described above, it exerts superior effects that it can provide a neutron scintillator, which does not contain a heavy element, which is absolutely necessary in realizing a scintillation detector having low sensitivity to gamma ray and fully capable of counting high intensity neutron.

It will be appreciated by those of ordinary skill in the art that the present invention can be embodied in other specific forms without departing from the spirit of essential characteristics thereof.

The presently disclosed embodiments are therefore considered in all respects to be illustrative and not restrictive. The scope of the invention is indicated by the appended claims rather than the above-described description, and all charges that come within the meaning and range of equivalents thereof are intended to be embraced therein.

The entire disclosure of Japanese Patent Application No.2001-279563 filed on September 14, 2001 including specification, claims, drawings and summary are incorporated herein by reference in its entirety.

## Claims

1. A neutron scintillator wherein:
Cu has been doped in oxide comprised of Li and B.

2. A neutron scintillator as claimed in Claim 1 wherein:
the scintillator contains Cu that is Cu₂O by 0.001wt% to 0.1wt%.

3. A neutron scintillator as claimed in Claim 1 wherein:
the oxide comprised of Li and B is a transparent single crystal having composition ratio of Li₂B₄O₇.

4. A neutron scintillator as claimed in Claim 2 wherein:
the oxide comprised of Li and B is a transparent single crystal having composition ratio of Li₂B₄O₇.

5. A neutron scintillator as claimed in Claim 3 wherein:
a (001) plane cut off perpendicularly to a growth axis and polished from the single crystal whose orientation has been grown in a 〈001〉 axis is made to be a scintillator plate crystal.

6. A neutron scintillator as claimed in Claim 4 wherein:
a (001) plane cut off perpendicularly to a growth axis and polished from the single crystal whose orientation has been grown in a <001> axis is made to be a scintillator plate crystal.

7. A neutron scintillator comprised of a single crystal wherein:
neutron counting ability is 10⁷/sec or more.
